(19) **Europäisches Patentamt European Patent Office Office européen des brevets**

(11) **EP 4 365 983 B1**

(12) **EUROPEAN PATENT SPECIFICATION**

(45) Date of publication and mention
of the grant of the patent:
**15.04.2026 Bulletin 2026/16**

(51) International Patent Classification (IPC):
*H01M 4/139* $^{(2010.01)}$    *H01M 4/62* $^{(2006.01)}$
*H01M 4/13* $^{(2010.01)}$    *H01M 10/052* $^{(2010.01)}$
*H01M 4/02* $^{(2006.01)}$    *H01M 4/583* $^{(2010.01)}$

(21) Application number: **22907929.8**

(22) Date of filing: **14.12.2022**

(52) Cooperative Patent Classification (CPC):
**H01M 4/134; H01M 4/364; H01M 4/48;**
**H01M 4/583; H01M 4/622; H01M 10/052;**
H01M 2004/021; H01M 2004/027; Y02E 60/10

(86) International application number:
**PCT/KR2022/020351**

(87) International publication number:
**WO 2023/113462 (22.06.2023 Gazette 2023/25)**

(54) **ANODE COMPOSITION, ANODE FOR LITHIUM SECONDARY BATTERY COMPRISING SAME, AND LITHIUM SECONDARY BATTERY COMPRISING ANODE**

ANODENZUSAMMENSETZUNG, ANODE FÜR LITHIUMSEKUNDÄRBATTERIE DAMIT UND LITHIUMSEKUNDÄRBATTERIE MIT ANODE

COMPOSITION D'ANODE, ANODE POUR BATTERIE SECONDAIRE AU LITHIUM LA COMPRENANT ET BATTERIE SECONDAIRE AU LITHIUM COMPRENANT L'ANODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2021 KR 20210180135**

(43) Date of publication of application:
**08.05.2024 Bulletin 2024/19**

(73) Proprietor: **LG ENERGY SOLUTION, LTD.**
**Seoul 07335 (KR)**

(72) Inventors:
• **KO, Minjin**
  **Daejeon 34122 (KR)**
• **KIM, Young Jae**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
KR-A- 20130 134 909    KR-A- 20130 134 917
KR-A- 20160 142 290    KR-A- 20180 075 308
KR-A- 20200 092 370    US-A1- 2015 243 994

## Description

[Technical Field]

This application claims priority to and the benefit of Korean Patent Application No. 10-2021-0180135 filed with the Korean Intellectual Property Office on December 15, 2021, the entire contents of which are incorporated herein by reference.

The present application relates to a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the increase of the technological development and demand for mobile devices, the demand for secondary batteries is also sharply increasing as an energy source. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions from the positive electrode, and silicon-based particles having a high discharge capacity may be used as the negative electrode active P Examples thereof could be found in Patent material. Literature 2.

In particular, according to the demand for high density energy batteries in recent years, research is being actively conducted on a method for increasing a capacity by using a silicon-based compound such as Si/C and SiOx having a capacity 10 times higher than that of a graphite-based material, as a negative electrode active material. However, as compared to graphite that is typically used, a silicon-based compound that is a high capacity material has a large capacity but undergoes rapid volume expansion during charging, thereby disconnecting a conductive path to degrade battery characteristics.

Accordingly, in order to address a problem occurring when the silicon-based compound is used as the negative electrode active material, a measure for controlling a driving potential, a measure for suppressing the volume expansion itself such as a method of further coating a thin film on an active material layer additionally and a method of controlling a particle diameter of a silicon-based compound, or various measures for preventing a conductive path from being disconnected have been discussed. However, the above measures may rather deteriorate the performance of a battery, and thus, the application thereof is limited, so that there is still a limitation in commercializing the manufacturing of a negative electrode battery having a high content of a silicon-based compound.

In particular, research on a composition of a binder according to the volume expansion is being conducted, and research is being conducted to use a binder polymer having strong stress in order to suppress the volume expansion of the negative electrode active material undergoing large volume change during charging/discharging. However, these binder polymers alone have limitations in suppressing the increase in thickness of an electrode due to the contraction and expansion of the negative electrode active material and the resulting deterioration in performance of the lithium secondary battery.

Therefore, it is necessary to research a negative electrode binder capable of minimizing the change in thickness of the negative electrode and thereby improving a capacity retention even when a negative electrode active material undergoing large volume expansion is used.

[Citation List]

(Patent Literature 1) Japanese Patent Application Laid-Open No. 2009-080971
(Patent Literature 2) US 2015/243994 A1

[Detailed Description of the Invention]

[Technical Problem]

It was found that, in order to solve the problem of the volume expansion, when a thermally crosslinkable negative electrode binder of a specific condition is introduced and crosslinking of the binder is progressed during an electrode manufacturing process, a volume change rate of the electrode can be suppressed and the capacity retention can be increased.

Accordingly, the present application relates to a negative electrode composition, a negative electrode for a lithium secondary battery including the same, and a lithium secondary battery including a negative electrode.

[Technical Solution]

An exemplary embodiment of the present specification provides a negative electrode composition including a thermally crosslinkable negative electrode binder solution including an epoxy resin having four or more epoxy functional groups, and a water-soluble macromolecular polymer containing a carboxyl group; a negative electrode active material; and a negative electrode conductive material, in which the epoxy resin is present in an amount of 0.1 part by weight or more and 25 parts by weight or less on the basis of 100 parts by weight of the thermally crosslinkable negative electrode binder solution.

Another exemplary embodiment of the present invention provides a negative electrode for a lithium secondary battery including a negative electrode current collector layer; and a negative electrode active material layer including the negative electrode composition according to the present application on one surface or both surfaces of the negative electrode current collector layer.

Still another exemplary embodiment of the present invention provides a lithium secondary battery including a positive electrode; the negative electrode for a lithium secondary battery according to the present application; a separator provided between the positive electrode and the negative electrode; and an electrolyte.

[Advantageous Effects]

The negative electrode composition according to the exemplary embodiment of the present invention has the main features that the thermally crosslinkable negative electrode binder solution including the epoxy resin having four or more epoxy functional groups, and the water-soluble macromolecular polymer containing the carboxyl group is included in the negative electrode composition.

In addition, the epoxy resin is present in the amount of 0.1 part by weight or more and 25 parts by weight or less on the basis of 100 parts by weight of the thermally crosslinkable negative electrode binder solution, and the epoxy resin may be used as a crosslinking agent for crosslinking the water-soluble macromolecular polymer. That is, according to the present invention, the thermally crosslinkable negative electrode binder solution of a specific composition is introduced and crosslinking of the thermally crosslinkable binder solution is progressed during an electrode (negative electrode) manufacturing process, so that a change in volume of the electrode can be suppressed. In addition, even when the negative electrode composition includes a negative electrode active material (in particular, a silicon-based active material) undergoing large volume expansion during charging/discharging, volume expansion and contraction can be suppressed. In addition, an electrode including the negative electrode composition can minimize a change in thickness due to electrode swelling, so that a resultant lithium secondary battery has excellent lifespan performance.

That is, the negative electrode composition according to the exemplary embodiment of the present invention includes the silicon-based active material having a high theoretical capacity as the negative electrode active material to improve the capacity characteristics, and addresses the volume expansion during charging/discharging, which is a problem of the silicon-based active material, by using the thermally crosslinkable negative electrode binder solution according to the present application.

[Brief Description of Drawings]

FIG. 1 shows a laminated structure of a negative electrode for a lithium secondary battery according to an exemplary embodiment of the present application.

FIG. 2 shows a laminated structure of a lithium secondary battery according to the exemplary embodiment of the present application.

<Explanation of Reference Numerals and Symbols>

| | |
|---|---|
| 10: | negative electrode current collector layer |
| 20: | negative electrode active material layer |
| 30: | separator |
| 40: | positive electrode active material layer |
| 50: | positive electrode current collector layer |
| 100: | negative electrode for lithium secondary battery |
| 200: | positive electrode for lithium secondary Battery |

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mino II of BEL Japan. That is, in the present application, the BET specific surface area may mean the specific surface area measured by the above measurement method.

In the present specification, "Dn" means a particle size distribution, and means a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, powders to be measured are dispersed in a dispersion medium, which is then introduced into a commercially available laser diffraction particle size measurement apparatus (for example, Microtrac S3500) in which a difference in diffraction patterns according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight means a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode composition including a thermally crosslinkable negative electrode binder solution including an epoxy resin having four or more epoxy functional groups, and a water-soluble macromolecular polymer containing a carboxyl group; a negative electrode active material; and a negative electrode conductive material, in which the epoxy resin is included in an amount of 0.1 part by weight or more and 25 parts by weight or less on the basis of 100 parts by weight of the thermally crosslinkable negative electrode binder solution.

The negative electrode composition according to the exemplary embodiment of the present invention includes the silicon-based active material having a high theoretical capacity as the negative electrode active material to improve the capacity characteristics, and addresses the volume expansion during charging/discharging, which is a problem of the silicon-based active material, by using the thermally crosslinkable negative electrode binder solution according to the present application.

In the exemplary embodiment of the present application, the thermally crosslinkable negative electrode binder solution may include an epoxy resin having four or more epoxy functional groups, and a water-soluble macromolecular polymer containing a carboxyl group.

In this case, the epoxy resin having four or more epoxy functional groups may be used as a crosslinking agent for crosslinking the water-soluble macromolecular polymer, and crosslinking of the thermally crosslinkable negative electrode binder solution is progressed through heating in a later battery (negative electrode) manufacturing process, thereby forming a thermally crosslinkable negative electrode binder. As such, the negative electrode composition according to the present application can be cured during the battery manufacturing process, and thus has excellent characteristics in terms of phase stability.

In the exemplary embodiment of the present application, the thermally crosslinkable negative electrode binder solution includes an epoxy resin having four or more epoxy functional groups.

In the exemplary embodiment of the present application, having four or more epoxy functional groups may mean that four or more epoxy groups are included in the resin. In particular, as an epoxy resin that is used as a general crosslinking agent, an epoxy resin having two or three epoxy functional groups is used. Compared to this case, the thermally crosslinkable negative electrode binder solution including the epoxy resin having four or more epoxy functional groups according to the present invention has an excellent degree of crosslinking of the binder during crosslinking. That is, four or more reaction sites are included so as to form a sufficient network structure with the water-soluble macromolecular polymer, so that smooth crosslinking can be induced, thereby preventing volume expansion of the electrode.

If there are only two epoxy groups acting as crosslinking sites, the polymer can be crosslinked, but a smooth bond with a water-soluble macromolecular polymer containing a carboxyl group may not be achieved due to factors such as steric hindrance. The main feature of the present application is that such problem has been found and the problem has been addressed by using the epoxy resin having four or more epoxy functional groups.

That is, the epoxy resin according to the present invention is an epoxy resin having at least four or more epoxy functional groups in a molecule. When the epoxy functional groups in the epoxy resin are 3 or less, it is difficult to form a sufficient network structure with the water-soluble macromolecular polymer, and the binding force between the water-soluble macromolecular polymers is reduced.

In the exemplary embodiment of the present application, there is provided the negative electrode composition in which the epoxy resin having four or more epoxy functional groups further includes one or more functional groups selected from the group consisting of a hydroxyl group; and a carboxyl group.

The epoxy resin according to the exemplary embodiment of the present application may contain one or more hydroxyl groups or carboxyl groups in a molecule, in addition to the four or more epoxy functional groups. As described above, when the epoxy resin further contains one or more selected from the group consisting of the hydroxyl group and the carboxyl group, the water dispersibility of the epoxy resin itself is improved and the compatibility with the water-soluble macromolecular polymer is improved.

In the exemplary embodiment of the present application, there is provided the negative electrode composition in which the epoxy resin is present in an amount of 0.1 part by weight or more and 25 parts by weight or less on the basis of 100 parts by weight of the thermally crosslinkable negative electrode binder solution.

In another exemplary embodiment, the epoxy resin may satisfy a range of 0.1 part by weight or more and 25 parts by weight or less, preferably 1 part by weight or more and 20 parts by weight or less, and more preferably 1 part by weight or more and 10 parts by weight or less, 2 parts by weight or more and 5 parts by weight or less, on the basis of 100 parts by weight of the thermally crosslinkable negative electrode binder solution.

As described above, when a specific epoxy resin has the range described above, the storage stability of the slurry is excellent, and the inter-molecular binding force can be increased through a crosslinking reaction.

That is, when the epoxy resin is less than the lower limit of the range, it is difficult to form a sufficient crosslinked structure through a crosslinking reaction with the water-soluble macromolecular polymer, and when the epoxy resin exceeds the upper limit of the range, the storage stability of the slurry may be degraded, and mechanical characteristics of the water-soluble macromolecular polymer and inter-molecular binding force are lowered.

In the exemplary embodiment of the present application, the negative electrode binder solution may include a water-soluble macromolecular polymer including a carboxyl group.

The carboxyl group included in the water-soluble macromolecular polymer may form a cross-linking bond with the epoxy group of the epoxy resin described above.

In the exemplary embodiment of the present application, there is provided the negative electrode composition in which the water-soluble macromolecular polymer includes one or more selected from the group consisting of carboxymethylcellulose (CMC) and derivatives thereof; water-soluble polyacrylic acid (PAA); polyvinyl alcohol (PVA); polyacrylonitrile (PAN); and polyacrylamide (PAM).

The water-soluble macromolecular polymer is in the form of a copolymer or a terpolymer, and may form a polymer by mixing additional monomers, depending on the purpose.

In the exemplary embodiment of the present application, the water-soluble macromolecular polymer may include a macromolecular resin having at least one carboxyl group.

In the exemplary embodiment of the present application, some or all of the carboxyl groups may have a structure substituted with $Li^+$, $Na^+$, or $K^+$.

In the exemplary embodiment of the present application, there is provided the negative electrode composition in which a weight-average molecular weight of the water-soluble macromolecular polymer is 100,000 g/mol or more and 3,000,000 g/mol or less.

In another exemplary embodiment, the weight-average molecular weight of the water-soluble macromolecular polymer may satisfy a range of 100,000 g/mol or more and 3,000,000 g/mol or less, and preferably 200,000 g/mol or more and 1,500,000 g/mol or less.

When the weight-average molecular weight of the water-soluble macromolecular polymer satisfies the above range, as described above, the mechanical strength is excellent and the binding force of the electrode is excellent due to high inter-molecular interaction. In addition, when the above range is satisfied, the viscosity of the negative electrode binder can be selected within an appropriate range, and therefore, when a negative electrode is manufactured using the same, the coatability of the electrode is excellent.

In the exemplary embodiment of the present application, the water-soluble macromolecular polymer may be included in an amount of 1 part by weight or more and 20 parts by weight or less, and preferably 1.5 parts by weight or more and 15 parts by weight or less, on the basis of 100 parts by weight of the negative electrode composition.

When the water-soluble macromolecular polymer is included within the above range in the negative electrode composition, the negative electrode active material can be effectively dispersed, and the characteristics of high electrode adhesive force and high binding force between active materials in the electrode against contraction and expansion of the negative electrode active material during charging and discharging of the lithium secondary battery are obtained.

In the exemplary embodiment of the present application, the thermally crosslinkable negative electrode binder solution may include at least one selected from the group consisting of polyvinylidenefluoride-hexafluoropropylene copolymer (PVDF-co-HFP), polyvinylidenefluoride, polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na or Ca, etc., and may further include various copolymers thereof.

The thermally crosslinkable negative electrode binder solution according to the exemplary embodiment of the present application may serve to hold the negative electrode active material and the negative electrode conductive material in order to prevent distortion and structural deformation of the negative electrode structure in volume expansion and relaxation of the silicon-based active material.

In the exemplary embodiment of the present application, there is provided the negative electrode composition in which the negative electrode binder solution is included in an amount of 1 part by weight or more and 20 parts by weight or less on the basis of 100 parts by weight of the negative electrode composition.

In another exemplary embodiment, the negative electrode binder solution may satisfy a range of 1 part by weight or more and 20 parts by weight or less, preferably 5 part by weight or more and 15 parts by weight or less, and more preferably 7 part by weight or more and 15 parts by weight or less on the basis of 100 parts by weight of the negative electrode composition.

In the exemplary embodiment of the present application, the thermally crosslinkable negative electrode binder solution has the features of suppressing the change in volume of the electrode and increasing the capacity retention through crosslinking of the water-soluble macromolecular polymer by heat applied during an electrode manufacturing process.

In the exemplary embodiment of the present application, there is provided the negative electrode composition in which the negative electrode active material includes one or more selected from the group consisting of a silicon-based active material and a carbon-based active material.

In the exemplary embodiment of the present application, the silicon-based active material may include one or more selected from the group consisting of SiOx (x=0), SiOx (0<x<2), SiC, and a Si alloy.

The active material of the present invention includes a silicon-based active material. The silicon-based active material may be SiOx, Si/C, or Si. SiOx may include a compound represented by SiOx ($0 \leq x < 2$). Since $SiO_2$ does not react with lithium ions and cannot store lithium, x is preferably within the above range. The silicon-based active material may be Si/C composed of a composite of Si and C, or Si. In addition, two or more of the above silicon-based active materials may be mixed and used. The negative electrode active material may further include a carbon-based active material together with the silicon-based active material described above. The carbon-based active material can contribute to improving cycle characteristics or battery lifespan performance of the negative electrode or secondary battery of the present invention.

In general, a silicon-based active material is known to have a capacity that is 10 times higher than that of a carbon-based active material, and accordingly, when the silicon-based active material is applied to a negative electrode, it is expected that an electrode having a high level of energy density can be implemented even with a thin thickness.

In the exemplary embodiment of the present application, the carbon-based active material may include at least one selected from the group consisting of artificial graphite, natural graphite, hard carbon, and soft carbon, and preferably may include at least one selected from the group consisting of artificial graphite and natural graphite.

In the exemplary embodiment of the present application, the negative electrode active material may be any material including (1) at least one of artificial graphite, natural graphite, surface modified graphite, coke, hard carbon, soft carbon, carbon fiber, conductive carbon, or combinations thereof, (2) silicon-based alloy, (3) a complex compound including or consisting of i) at least one of artificial graphite, natural graphite, surface modified graphite, coke, hard carbon, soft carbon, carbon fiber, conductive carbon, or combinations thereof and ii) metal selected from the group consisting of Al, Ag, Bi, In, Ge, Mg, Pb, Si, Sn, Ti, and combinations thereof, (4) a lithium complex metal oxide, (5) a lithium-containing nitride, (6) silicon-graphene, (7) a silicon-carbon nanotube, (8) silicon oxide, (9) silicon, and (10) combinations thereof.

In the exemplary embodiment of the present application, there is provided the negative electrode composition in which the silicon-based active material includes one or more selected from the group consisting of SiOx (x=0) and SiOx (0<x<2), and includes 70 parts by weight or more of SiOx (x=0), on the basis of 100 parts by weight of the silicon-based active material.

In another exemplary embodiment, on the basis of 100 parts by weight of the silicon-based active material, SiOx (x=0) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less.

In the exemplary embodiment of the present application, the silicon-based active material may use only pure silicon (Si) as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

The capacity of the silicon-based active material is significantly higher than that of a graphite-based active material that is typically used, so that there have been more attempts to apply the same. However, the volume expansion rate of the silicon-based active material during charging/discharging is high, so that only a small amount thereof is mixed and used with a graphite-based active material.

Therefore, the present invention has such features that while using the silicon-based active material as the negative electrode active material for improving the capacity performance, the thermally crosslinkable negative electrode binder solution of the specific condition is used in order to address the problems of maintaining the conductive path and the combination of the conductive material, the binder, and the active material with respect to the volume expansion described above.

An average particle diameter (D50) of the silicon-based active material of the present invention may be 5 $\mu$m to 10 $\mu$m, specifically 5.5 $\mu$m to 8 $\mu$m, and more specifically 6 $\mu$m to 7 $\mu$m. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value, a contact area between the silicon particles and the conductive material is excellent due to the composite made of the conductive material and the binder in the negative electrode slurry, so that a continuing possibility of the conductive network increases, thereby increasing the capacity retention. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In the exemplary embodiment of the present application, the silicon-based active material generally has a characteristic BET surface area. The BET surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured in accordance with DIN 66131 (using nitrogen).

In the exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In the exemplary embodiment of the present application, there is provided the negative electrode composition in which the negative electrode active material, such as the silicon-based active material, is included in an amount of 60 parts by weight or more on the basis of 100 parts by weight of the negative electrode composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 85 parts by weight or less, on the basis of 100 parts by weight of the negative electrode composition. The negative electrode composition according to the present application uses the specific conductive material and binder capable of controlling the volume expansion rate during charging and discharging even when the silicon-based active material having a significantly high capacity is used within the above range. Accordingly, even when the silicon-based active material is within the above range, the negative electrode composition does not degrade the performance of the negative electrode and has excellent output characteristics in charging and discharging.

In the exemplary embodiment of the present application, the silicon-based active material may have a non-spherical shape and its circularity is, for example, 0.9 or less, for example, 0.7 to 0.9, for example 0.8 to 0.9, and for example 0.85 to 0.9.

In the present application, the circularity is determined by Equation 1-1, in which A is an area and P is a boundary line.

$$[\text{Equation } 1\text{-}1]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in the exemplary embodiment of the present application, while using the binder having the features described above, the negative electrode composition may include the specific negative electrode conductive material at the same time.

In the exemplary embodiment of the present application, there is provided the negative electrode composition in which the negative electrode conductive material includes one or more selected from the group consisting of a point-type conductive material, a planar conductive material and a linear conductive material.

In the exemplary embodiment of the present application, the point-type conductive material refers to a conductive material that may be used for improving conductivity of the negative electrode, forms conductivity without causing a chemical change and has a circular or point shape. Specifically, the point-type conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In the exemplary embodiment of the present application, the point-type conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In the exemplary embodiment of the present application, the particle diameter of the point-type conductive material may be 10 nm to 100 nm, preferably 20 nm to 90 nm, and more preferably 40 nm to 60 nm.

In the exemplary embodiment of the present application, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-shaped conductive material or a bulk-type conductive material.

In the exemplary embodiment of the present application, the planar conductive material may include at least one selected from the group consisting of plate-like graphite, graphene, graphene oxide, and graphite flakes, and preferably may be plate-like graphite.

In the exemplary embodiment of the present application, the average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In the exemplary embodiment of the present application, there is provided the negative electrode composition in which the planar conductive material has D10 of 0.5 $\mu$m or greater and 1.5 $\mu$m or less, D50 of 4.0 $\mu$m or greater and 5.0 $\mu$m or less and D90 of 7.0 $\mu$m or greater and 15.0 $\mu$m or less.

In the exemplary embodiment of the present application, for the planar conductive material, a planar conductive material with a high specific surface area having a high BET specific surface area or a planar conductive material with a low specific surface area may be used.

In the exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In the exemplary embodiment of the present application, the planar conductive material may have a BET specific surface area of 1 $m^2$/g or greater.

In another exemplary embodiment, the planar conductive material may have a BET specific surface area of 1 $m^2$/g or greater and 500$m^2$/ g or less, preferably 5 $m^2$/g or greater and 300 $m^2$/g or less, and more preferably 5 $m^2$/g or greater and 300 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 250 $m^2$/g or less.

In another exemplary embodiment, the planar conductive material is a planar conductive material with a low specific surface area, and the BET specific surface area may satisfy a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side or entangled in such an orientation that longitudinal axes of the carbon nanotube units are substantially the same. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during manufacturing of the negative electrode, and can form more smoothly a conductive network in the negative electrode to improve the conductivity of the negative electrode.

In the exemplary embodiment of the present application, there is provided the negative electrode composition in which the negative electrode conductive material includes a linear conductive material and the linear conductive material is carbon nanotubes.

In the exemplary embodiment of the present application, the carbon nanotubes may be SWCNT or/and MWCNT. When the linear conductive material is SWCNT, a length of the SWCNT may be 0.5 $\mu$m to 100 $\mu$m, and preferably 1 $\mu$m to 80 $\mu$m.

In the exemplary embodiment of the present application, there is provided the negative electrode composition in which the negative electrode conductive material is included in an amount of 5 parts by weight or more and 40 parts by weight or less on the basis of 100 parts by weight of the negative electrode composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less, on the basis of 100 parts by weight of the negative electrode composition.

In the exemplary embodiment of the present application, the negative electrode conductive material includes a point-type conductive material and a linear conductive material, and a ratio of the point-type conductive material to the linear conductive material may satisfy 1:0.001 to 1:0.05.

In the exemplary embodiment of the present application, as the negative electrode conductive material includes the point-type conductive material and the linear conductive material and the composition and ratio described above are satisfied, respectively, the lifespan characteristics of an existing lithium secondary battery are not significantly affected, and the number of points where charging and discharging are possible increases, so that output characteristics are excellent at a high C-rate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving a buffer at the time of roll-pressing, and is completely different from the negative electrode conductive material of the present invention in terms of configuration and role.

In the exemplary embodiment of the present application, the negative electrode composition may include a solvent for negative electrode slurry formation and form a negative electrode slurry, and the negative electrode slurry may be applied to a negative electrode current collector layer to form a negative electrode.

In this case, a solid content of the negative electrode slurry may satisfy 10% to 60%.

In the exemplary embodiment of the present application, the solvent for negative electrode slurry formation may be used without limitation as long as it can dissolve the negative electrode composition, but specifically, distilled water or NMP may be used.

In the exemplary embodiment of the present invention, the negative electrode slurry mixing method is not particularly limited, and a ball mill, a sand mill, a pigment disperser, an ultrasonic disperser, a homogenizer, a planetary mixer, a Hobart mixer, etc. are exemplified, and preferably, kneading is performed using a homogenizer and/or a planetary mixer.

In the exemplary embodiment of the present application, a means for applying the negative electrode slurry to the negative electrode current collector layer is not particularly limited, and a conventionally known coating device such as a comma coater, a gravure coater, a micro gravure coater, a die coater, a bar coater, etc. may be used.

In addition, a drying process may be performed after applying the negative electrode slurry, a drying means is not also particularly limited, and the temperature is suitably 60 to 200°C, preferably 100 to 180°C. The atmosphere may be dry air or an inert atmosphere. A thickness of the electrode (cured coating film) is not particularly limited, but is suitably 5 to 300 $\mu$m, and preferably 10 to 250 $\mu$m.

In an exemplary embodiment of the present application, there is provided a negative electrode for a lithium secondary battery including: a negative electrode current collector layer; and a negative electrode active material layer including the negative electrode composition according to the present application formed on one surface or both surfaces of the negative electrode current collector layer.

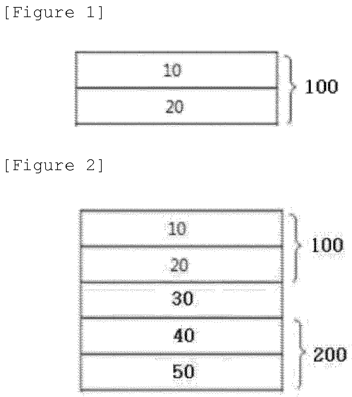

FIG. 1 shows a laminated structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface, but the negative electrode active material layer may be formed on both surfaces of the negative electrode current collector layer.

In the exemplary embodiment of the present application, the negative electrode current collector layer generally has a thickness of 1 $\mu$m to 100 $\mu$m. The negative electrode current collector layer is not particularly limited as long as it has high conductivity without causing chemical change in the battery. For example, copper, stainless steel, aluminum, nickel, titanium, fired carbon, copper or stainless steel each surface treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body. Particularly, when using an electrode active material for a negative electrode, a copper foil is preferable as a current collector.

In the exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 20 $\mu$m or greater and 500 $\mu$m or less.

However, the thicknesses may be variously modified depending on a type and use of the negative electrode used, and are not limited thereto.

In the exemplary embodiment of the present application, there is provided the negative electrode for a lithium secondary battery in which a thickness change rate of the negative electrode active material layer satisfies Equation 1 below.

$$[\text{Equation 1}]$$

$$0\% \leq [(X2-X1) \, / \, X1] \, x \, 100(\%) \, \leq 15\%$$

in Equation 1,

X1 is a thickness of the negative electrode active material layer at 0 cycle of the negative electrode for a lithium secondary battery, and
X2 is a thickness of the negative electrode active material layer after 30 cycles of the negative electrode for a lithium secondary battery.

0 cycle may mean a state in which a negative electrode for a lithium secondary battery is manufactured and is not subjected to charging/discharging, and specifically, may mean a negative electrode for a lithium secondary battery after manufacturing.

That is, the negative electrode for a lithium secondary battery according to the present application has such features that since the negative electrode binder including the specific epoxy resin is used as a binder, volume expansion of the negative electrode active material is prevented even after cycles are repeated as the negative electrode binder is used, and therefore, the change in thickness is small.

In an exemplary embodiment of the present application, there is provided a lithium secondary battery including a positive electrode; the negative electrode for a lithium secondary battery according to the present application; a separator provided between the positive electrode and the negative electrode; and an electrolyte.

FIG. 2 shows a laminated structure of a lithium secondary battery according to the exemplary embodiment of the present application. Specifically, a negative electrode 100 for a lithium secondary battery including the negative electrode active material layer 20 on one surface of the negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a laminated structure with a separator 30 interposed therebetween.

A secondary battery according to the exemplary embodiment of the present invention may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 $\mu$m or greater.

For example, the average particle diameter (D50) of the single particles may be 1 $\mu$m or greater and 12 $\mu$m or less, 1 $\mu$m or greater and 8 $\mu$m or less, 1 $\mu$m or greater and 6 $\mu$m or less, greater than 1 $\mu$m and 12 $\mu$m or less, greater than 1 $\mu$m and 8 $\mu$m or less, or greater than 1 $\mu$m and 6 $\mu$m or less.

Even when the single particles are formed with a small average particle diameter (D50) of 1 $\mu$m or greater and 12 $\mu$m or less, the particle strength may be excellent. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, the increase phenomenon of micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than that of the secondary particles. For example, when the composition of the precursor is the same, the firing should be performed at a temperature higher than that of the secondary particles by about 30°C to 100°C. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material containing a lithium complex transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present invention, the single particle may be a single particle consisting of one primary particle or a quasi-single particle form that is an aggregate of 30 or less primary particles, and the secondary particle may be an aggregate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle means a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 $\mu$m to 20 $\mu$m, 2 $\mu$m to 17 $\mu$m, and preferably 3 $\mu$m to 15 $\mu$m. The specific surface area (BET) of the secondary particles may be 0.05 m$^2$/g to 10 m$^2$/g, preferably 0.1 m$^2$/g to 1 m$^2$/g, and more preferably 0.3 m$^2$/g to 0.8 m$^2$/g.

In a further exemplary embodiment of the present application, the secondary particle is an aggregate of primary particles, and the average particle diameter (D50) of the primary particles is 0.5 $\mu$m to 3 $\mu$m. Specifically, the secondary particle may be an aggregate form of hundreds of primary particles, and the average particle diameter (D50) of the primary particles may be 0.6 $\mu$m to 2.8 $\mu$m, 0.8 $\mu$m to 2.5 $\mu$m, or 0.8 $\mu$m to 1.5 $\mu$m.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to the further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, the increase phenomenon of micro-particles in an electrode due to particle breakage is alleviated, thereby improving the lifetime characteristic of the battery.

In the exemplary embodiment of the present application, the average particle diameter (D50) of the single particles is smaller than the average particle diameter (D50) of the secondary particles by 1 $\mu$m to 18 $\mu$m.

For example, the average particle diameter (D50) of the single particles may be 1 $\mu$m to 16 $\mu$m smaller, 1.5 $\mu$m to 15 $\mu$m smaller, or 2 $\mu$m to 14 $\mu$m smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the increase phenomenon of micro-particles in an electrode due to particle breakage is alleviated, thereby improving the lifetime characteristic of the battery and the energy density.

According to the further exemplary embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are 15 parts by weight or more, the increase phenomenon of micro-particles in an electrode due to particle breakage in a roll-pressing process after fabrication of an electrode can be alleviated, thereby improving the lifetime characteristic of the battery.

In the exemplary embodiment of the present application, the lithium composite transition metal compound may further include secondary particles, and the secondary particles may be 85 parts by weight or less on the basis of 100 parts by weight of the positive electrode active material. The secondary particles may be 80 parts by weight or less, 75 parts by weight or less, or 70 parts by weight or less on the basis of 100 parts by weight of the positive electrode active material. The secondary particles may be 0 part by weight or more on the basis of 100 parts by weight of the positive electrode active material.

When the above range is satisfied, the above-described effects due to the existence the single particles in the positive electrode active material can be maximized. In the case in which the positive electrode active material of the secondary particles is included, the components thereof may be the same as or different from those exemplified in the single-particle positive electrode active material described above, and may mean an aggregate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto. Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used. In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of F⁻, Cl⁻, I⁻, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

The lithium secondary battery according to the present invention is useful for portable devices such as mobile phones, laptop computers and digital cameras, and electric vehicles such as hybrid electric vehicles (HEVs), and can be preferably used as a component battery of a medium and large sized battery module, particularly. Accordingly, the present invention provides a medium and large sized battery module including the lithium secondary battery described above as a unit battery.

An exemplary embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples>**

**<Synthesis of Water-Soluble Macromolecular Polymer Containing Carboxyl Group>**

<u>Synthesis Example 1</u>

45 g of PVA (polyvinyl alcohol, Mw=2400) and 500 g of water were put into a reactor fitted with a stirrer, a thermometer, a reflux condenser, and a nitrogen gas inflow pipe, raised to 90°C and dissolved. 0.3 g of glutaraldehyde (25% aqueous solution) and 30 g of water were mixed and added in the solution, and the mixture was then maintained for 2 hours. Thereafter, the reactant was cooled to 50°C, a solution in which 1 g of APS (ammonium persulfate) was dissolved in 10 g of water and a solution in which 0.3 g of $NaHSO_3$ was dissolved in 3 g of water were sequentially added, and then the mixture was maintained for 10 minutes. While introducing nitrogen, 35 g of acrylic acid (AA), 15 g of N-hydroxyethylacrylamide) (HEAA) and 250 g of water were mixed, and the mixture was then added dropwise for 30 minutes and maintained for 2 hours. Next, an aqueous solution in which 0.5 g of NaOH was dissolved in 3 g of water was gradually added to manufacture a macromolecular polymer aqueous solution including a carboxyl group.

<u>Synthesis Example 2</u>

1254 g of water, 200 g of acrylamide (50% aqueous solution), 40 g of acrylic acid (AA) (80% aqueous solution), 20 g of 48% sodium hydroxide (48% aqueous solution) and 50 g of acrylonitrile were put into a reactor fitted with a stirrer, a thermometer, a reflux condenser, and a nitrogen gas inflow pipe, and raised to 50°C. 2.0 g of 2,2'-azobis-2-amidinopropane dihydrochloride and 20 g of water were added thereto, raised to 80°C, and reacted for 3 hours to manufacture a polyacrylamide macromolecular polymer aqueous solution.

<u>**<Manufacturing of Negative Electrode Slurry>**</u>

<u>**<Example 1>**</u>

As a negative electrode active material, 1) artificial graphite with d50=15 $\mu$m was used, and 2) SiOx (d50=1 to 6

$\mu$m) as silicon was used, and graphite and silicon was mixed in a weight ratio of graphite:silicon of 8:2, as a conductive material, Super-P black and SWCNT (Super-P:SWCNT weight ratio=1:0.001) were used, and the active material, the conductive material and the binder were mixed in a weight ratio of 85:5:10 to prepare a slurry composition.

As the binder, the macromolecular polymer aqueous solution in Synthesis Example 1 and the epoxy resin (Huntzman ERISYS GE-60 (tetrafunctional epoxy resin, containing hydroxyl group)) were used in a ratio of 95:5. At this time, the content of water as a solvent was adjusted in consideration of coatability, viscosity, and solid content. The viscosity of the obtained slurry composition was adjusted to be 5,000 to 6,000 cps.

### <Example 2>

A slurry composition was manufactured in the same method as in Example 1, except that, in Example 1, the macromolecular polymer aqueous solution in Synthesis Example 2 and the epoxy resin (Huntzman ERISYS GE-60 (tetrafunctional epoxy resin, containing hydroxyl group)) were used in a ratio of 95:5.

### <Example 3>

A slurry composition was manufactured in the same method as in Example 1, except that, in Example 1, the macromolecular polymer aqueous solution in Synthesis Example 1 and the epoxy resin (Huntzman ERISYS GE-60 (tetrafunctional epoxy resin, containing hydroxyl group)) were used in a ratio of 80:20.

### <Example 4>

A slurry composition was manufactured in the same method as in Example 1, except that Si (average particle diameter (D50): 3.5 $\mu$m) in Example 1 was used as the silicon-based active material, Super-P black and SWCNT (weight ratio of Super-P: SWCNT=1:0.001) were used as the conductive material, and the active material, the conductive material and the binder were mixed in a weight ratio of 85:5:10 to prepare the negative electrode composition.

### <Comparative Example 1>

A slurry composition was manufactured in the same method as in Example 1, except that, in Example 1, the macromolecular polymer aqueous solution in Synthesis Example 1 and the epoxy resin (Huntzman ERISYS GE-21 (bifunctional epoxy resin)) were used in a ratio of 95:5.

### <Comparative Example 2>

A slurry composition was manufactured in the same method as in Example 1, except that, in Example 1, the macromolecular polymer aqueous solution in Synthesis Example 2 and the epoxy resin (Xinyuan XY636 (bifunctional epoxy resin, containing a hydroxyl group)) were used in a ratio of 95:5.

### <Comparative Example 3>

A slurry composition was manufactured in the same method as in Example 1, except that, in Example 1, the macromolecular polymer aqueous solution in Synthesis Example 1 and the epoxy resin (Huntzman ERISYS GE-36 (trifunctional epoxy resin)) were used in a ratio of 95:5.

### <Comparative Example 4>

A slurry composition was manufactured in the same method as in Example 1, except that, in Example 1, the macromolecular polymer aqueous solution in Synthesis Example 1 and the epoxy resin (Huntzman ERISYS GE-60 (tetrafunctional epoxy resin, containing hydroxyl group)) were used in a ratio of 70:30.

### <Comparative Example 5>

A slurry composition was manufactured in the same method as in Example 1, except that, in Example 1, the macromolecular polymer aqueous solution in Synthesis Example 1 was used and no epoxy resin was used.

**<Manufacturing of Battery and Evaluation of Battery Characteristics>**

The negative electrode slurries manufactured in Examples 1 to 4 and Comparative Examples 1 to 5 were coated on the copper foil having a thickness of 18 $\mu$m and dried to form an active material layer having a thickness of 50 $\mu$m on one surface of the copper foil, which was then punched into a circular shape having a diameter of 14Φ to manufacture a test electrode (negative electrode).

A metal lithium foil with a thickness of 0.3 mm was used as a positive electrode, a porous polyethylene sheet with a thickness of 0.1 mm was used as a separator, and a solution obtained by dissolving $LiPF_6$ as lithium salt to a concentration of about 1 mole/L in a mixed solvent in which ethylene carbonate (EC) and ethylmethyl carbonate (EMC) were mixed in a volume ratio of 1:3 was used as an electrolyte. The negative electrode, the positive electrode, the separator, and the electrolyte were sealed in a stainless steel container to manufacture a coin cell for evaluation having a thickness of 2 mm and a diameter of 32 mm. The evaluation results are shown in Table 1 below.

[Table 1]

| | Example 1 | Example 2 | Example 3 | Example 4 | Comparative Example 1 | Comparative Example 2 | Comparative Example 3 | Comparative Example 4 | Comparative Example 5 | Remarks |
|---|---|---|---|---|---|---|---|---|---|---|
| Initial efficiency (%) | 88.8 | 87.9 | 87.4 | 92.1 | 87 | 87.7 | 86.5 | 86.5 | 87.8 | Discharge capacity/ charge capacity |
| Capacity retention (%) | 91 | 88 | 85 | 82 | 60 | 71 | 50 | 58 | 62 | 30 cycles |
| Thickness increase rate (%) | 5 | 7 | 14 | 14 | 28 | 22 | 35 | 27 | 36 | 30 cycles |

- Initial efficiency (%): The coin cell was charged to a voltage of 0.01V at a constant current of 0.05C and discharged to a voltage of 1.5V at a constant current of 0.05C to obtain discharge capacity and initial efficiency, respectively. The initial efficiency was indicated by a value of (discharge capacity/charge capacity) x 100(%).
- Capacity retention (%): The coin cell was charged to a voltage of 0.01V at a constant current of 0.05C and discharged to a voltage of 1.5V at a constant current of 0.05C. Subsequently, the cycle characteristics were calculated for 30 cycles by performing a capacity retention test within the same voltage range as in the above at a constant current of 0.2C.
- Thickness increase rate (%) : The thickness (X1) of the negative electrode active material layer in the manufactured coin cell was measured. The coin cell was charged to a voltage of 0.01V at a constant current of 0.05C and discharged to a voltage of 1.5V at a constant current of 0.05C. Subsequently, the cycle characteristics were calculated for 30 cycles by performing a capacity retention test within the same voltage range as in the above at a constant current of 0.2C. Then, the thickness (X2) of the negative electrode active material layer in the coin cell was measured after 30 cycles.

After that, the thickness increase rate was calculated according to Equation 1 above.

As can be seen from the results of Table 1, Examples 1 to 4 correspond to batteries manufactured with the negative electrode composition including the thermally crosslinkable negative electrode binder solution including the specific epoxy resin according to the present application. It could be confirmed that the thickness change rate due to the volume expansion during charging/discharging was smaller and the cycle capacity retention was more excellent, as compared with the batteries manufactured with the negative electrode compositions containing the other binders of Comparative Examples 1 to 5.

In particular, in Example 4, 100% Si was applied as the negative electrode active material. It was generally difficult to apply pure Si due to severe volume expansion during charging and discharging. However, it could be confirmed that the initial efficiency was superior to those of Examples 1 to 3 because the specific binder according to the present invention was included. The thickness increase was also greater than Examples 1 to 3 in terms of material properties because pure Si particles were used. However, the binder of the present invention was applied, so that the thickness increase rate was within the range of 0 to 15%, in which case it is not a problem in driving the negative electrode. That is, it could be confirmed that the negative electrode of Example 4 could easily control the volume expansion while maximizing the capacity characteristics.

Specifically, Comparative Examples 1 to 3 in Table 1 used the bifunctional epoxy resin or the trifunctional epoxy resin, and it could be confirmed that curing did not occur smoothly during the manufacture of the negative electrode because many crosslinking sites were not formed. Accordingly, it could be confirmed that the binding force between the water-soluble macromolecular polymers was lowered to reduce the capacity retention and a lot of thickness changes occurred.

In addition, Comparative Example 4 in Table 1 corresponds to the case where the epoxy resin according to the present application was used, but exceeded the upper limit of the range, and Comparative Example 5 in Table 1 corresponds to the case where the epoxy resin was less than the lower limit of the range. It could be confirmed that in Comparative Example 4, the volume expansion of the negative electrode occurred due to the decrease in mechanical characteristics of the water-soluble macromolecular polymer and the decrease in inter-molecular binding force, and in Comparative Example 5, similar to Comparative Examples 1 to 3, crosslinking was not easily formed to decrease the capacity retention and a lot of thickness changes also occurred.

**Claims**

1. A negative electrode composition comprising:

    a thermally crosslinkable negative electrode binder solution comprising an epoxy resin having four or more epoxy functional groups, and a water-soluble macromolecular polymer containing a carboxyl group;
    a negative electrode active material; and
    a negative electrode conductive material,
    wherein the epoxy resin is present in an amount of 0.1 part by weight or more and 25 parts by weight or less on the basis of 100 parts by weight of the thermally crosslinkable negative electrode binder solution,
    wherein the epoxy resin further comprises one or more functional groups selected from the group consisting of a hydroxyl group and a carboxyl group.

2. The negative electrode composition of claim 1, wherein the thermally crosslinkable negative electrode binder solution is present in an amount of 1 part by weight or more and 20 parts by weight or less on the basis of 100 parts by weight of the negative electrode composition.

3. The negative electrode composition of claim 1, wherein the water-soluble macromolecular polymer has a weight-average molecular weight measured according to the description of 100,000 g/mol or more and 3,000,000 g/mol or less.

4. The negative electrode composition of claim 1, wherein the water-soluble macromolecular polymer comprises one or more selected from the group consisting of carboxymethylcellulose (CMC) and derivatives thereof; water-soluble polyacrylic acid (PAA); polyvinyl alcohol (PVA); polyacrylonitrile (PAN); and polyacrylamide (PAM).

5. The negative electrode composition of claim 1, wherein the negative electrode conductive material comprises one or more selected from the group consisting of a point-type conductive material, a planar conductive material and a linear conductive material.

6. The negative electrode composition of claim 1, wherein the negative electrode active material comprises one or more selected from the group consisting of a silicon-containing active material and a carbon-containing active material.

7. The negative electrode composition of claim 6, wherein the silicon-containing active material comprises one or more selected from the group consisting of SiOx (x=0) and SiOx (0<x<2), and comprises 70 parts by weight or more of SiOx (x=0), on the basis of 100 parts by weight of the silicon-containing active material.

8. The negative electrode composition of claim 1, wherein the negative electrode active material is present in an amount of 60 parts by weight or more on the basis of 100 parts by weight of the negative electrode composition.

9. A negative electrode for a lithium secondary battery comprising:

a negative electrode current collector layer; and
a negative electrode active material layer comprising the negative electrode composition of any one of claims 1 to 9 on one surface or both surfaces of the negative electrode current collector layer.

10. The negative electrode for the lithium secondary battery of claim 9, wherein a thickness of the negative electrode current collector layer is 1 $\mu$m or greater and 100 $\mu$m or less, and
wherein a thickness of the negative electrode active material layer is 20 $\mu$m or greater and 500 $\mu$m or less.

11. A lithium secondary battery comprising:

a positive electrode;
the negative electrode for a lithium secondary battery of claim 9;
a separator between the positive electrode and the negative electrode; and
an electrolyte.


**Patentansprüche**

1. Negativelektrodenzusammensetzung, umfassend:

eine thermisch vernetzbare Bindemittellösung für eine negative Elektrode, umfassend ein Epoxidharz mit vier oder mehreren funktionellen Epoxygruppen und einem wasserlöslichen makromolekularen Polymer mit einer Carboxylgruppe;
ein Aktivmaterial für eine negative Elektrode; und
ein leitfähiges Material für eine negative Elektrode,
worin das Epoxidharz in einer Menge von 0,1 Gewichtsteilen oder mehr und 25 Gewichtsteilen oder weniger, bezogen auf 100 Gewichtsteile der thermisch vernetzbaren Bindemittellösung für eine negative Elektrode, vorhanden ist,
worin das Epoxidharz ferner eine oder mehrere funktionelle Gruppen umfasst, ausgewählt aus der Gruppe, bestehend aus einer Hydroxylgruppe und einer Carboxylgruppe.

2. Negativelektrodenzusammensetzung gemäß Anspruch 1, worin die thermisch vernetzbare Bindemittellösung für eine negative Elektrode in einer Menge von 1 Gewichtsteil oder mehr und 20 Gewichtsteilen oder weniger, bezogen auf 100 Gewichtsteile der Negativelektrodenzusammensetzung, vorhanden ist.

3.  Negativelektrodenzusammensetzung gemäß Anspruch 1, worin das wasserlösliche makromolekulare Polymer ein gewichtsmittleres Molekulargewicht von 100.000 g/mol oder mehr und 3.000.000 g/mol oder weniger, gemessen gemäß der Beschreibung, aufweist.

4.  Negativelektrodenzusammensetzung gemäß Anspruch 1, worin das wasserlösliche makromolekulare Polymer eines oder mehrere umfasst, ausgewählt aus der Gruppe, bestehend aus Carboxymethylcellulose (CMC) und Derivaten davon; wasserlöslicher Ppolyacrylsäure (PAA); Polyvinylalkohol (PVA); Polyacrylonitril (PAN); und Polyacrylamid (PAM).

5.  Negativelektrodenzusammensetzung gemäß Anspruch 1, worin das leitfähige Material für eine negative Elektrode eines oder mehrere umfasst, ausgewählt aus der Gruppe, bestehend aus einem punktförmigen leitfähigen Material, einem planaren leitfähigen Material und einem linearen leitfähigen Material.

6.  Negativelektrodenzusammensetzung gemäß Anspruch 1, worin das Aktivmaterial für eine negative Elektrode eines oder mehrere umfasst, ausgewählt aus der Gruppe, bestehend aus einem Silicium-haltigen Aktivmaterial und einem Kohlenstoffhaltigen Aktivmaterial.

7.  Negativelektrodenzusammensetzung gemäß Anspruch 6, worin das Silicium-haltige Aktivmaterial eines oder mehrere umfasst, ausgewählt aus der Gruppe, bestehend aus SiOx (x=0) und SiOx (0<x<2), und 70 Gewichtsteile oder mehr SiOx (x=0), bezogen auf 100 Gewichtsteile des Silicium-haltigen Aktivmaterials, umfasst.

8.  Negativelektrodenzusammensetzung gemäß Anspruch 1, worin das Aktivmaterial für eine negative Elektrode in einer Menge von 60 Gewichtsteilen oder mehr, bezogen auf 100 Gewichtsteile der Negativelektrodenzusammensetzung, vorhanden ist.

9.  Negative Elektrode für eine Lithiumsekundärbatterie, umfassend:

    eine Stromabnehmerschicht für eine negative Elektrode; und
    eine Aktivmaterialschicht für eine negative Elektrode, umfassend die Negativelektrodenzusammensetzung gemäß einem der Ansprüche 1 bis 9 auf einer Oberfläche oder beiden Oberflächen der Stromabnehmerschicht für eine negative Elektrode.

10. Negative Elektrode für eine Lithiumsekundärbatterie gemäß Anspruch 9, worin eine Dicke der Stromabnehmerschicht für eine negative Elektrode 1 $\mu$m oder größer und 100 $\mu$m oder weniger beträgt und worin eine Dicke der Aktivmaterialschicht für eine negative Elektrode 20 $\mu$m oder größer und 500 $\mu$m oder weniger beträgt.

11. Lithiumsekundärbatterie, umfassend:

    eine positive Elektrode;
    die negative Elektrode für eine Lithiumsekundärbatterie gemäß Anspruch 9;
    einen Separator zwischen der positiven Elektrode und der negativen Elektrode; und
    einen Elektrolyten.

**Revendications**

1.  Composition d'électrode négative comprenant :

    une solution de liant d'électrode négative réticulable thermiquement comprenant une résine époxy comportant au moins quatre groupes fonctionnels époxy et un polymère macromoléculaire hydrosoluble contenant un groupe carboxyle ;
    un matériau actif d'électrode négative ; et
    un matériau conducteur d'électrode négative,
    dans laquelle la résine époxy est présente en une quantité de 0,1 partie en poids ou plus et 25 parties en poids ou moins par rapport à 100 parties en poids de la solution de liant d'électrode négative réticulable thermiquement, dans laquelle la résine époxy comprend en outre un ou plusieurs groupes fonctionnels sélectionnés dans le groupe constitué par un groupe hydroxyle et un groupe carboxyle.

2. Composition d'électrode négative selon la revendication 1, dans laquelle la solution de liant d'électrode négative réticulable thermiquement est présente en une quantité de 1 partie en poids ou plus et 20 parties en poids ou moins par rapport à 100 parties en poids de la composition d'électrode négative.

3. Composition d'électrode négative selon la revendication 1, dans laquelle le polymère macromoléculaire hydrosoluble présente un poids moléculaire moyen en poids de 100 000 g/mol ou plus et de 3 000 000 g/mol ou moins.

4. Composition d'électrode négative selon la revendication 1, dans laquelle le polymère macromoléculaire hydrosoluble comprend un ou plusieurs sélectionnés dans le groupe constitué par la carboxyméthylcellulose (CMC) et des dérivés de celle-ci ; l'acide polyacrylique hydrosoluble (PAA) ; l'alcool polyvinylique (PVA) ; le poly(acrylonitrile) (PAN) ; et le polyacrylamide (PAM).

5. Composition d'électrode négative selon la revendication 1, dans laquelle le matériau conducteur d'électrode négative comprend un ou plusieurs sélectionnés dans le groupe constitué par un matériau conducteur ponctuel, un matériau conducteur planaire et un matériau conducteur linéaire.

6. Composition d'électrode négative selon la revendication 1, dans laquelle le matériau actif d'électrode négative comprend un ou plusieurs sélectionnés dans le groupe constitué par un matériau actif contenant du silicium et un matériau actif contenant du carbone.

7. Composition d'électrode négative selon la revendication 6, dans laquelle le matériau actif contenant du silicium comprend un ou plusieurs sélectionnés dans le groupe constitué par SiOx (x=0) et de SiOx (0<x<2), et comprend 70 parties en poids ou plus de SiOx (x=0), par rapport à 100 parties en poids du matériau actif contenant du silicium.

8. Composition d'électrode négative selon la revendication 1, dans laquelle le matériau actif d'électrode négative est présent en une quantité de 60 parties en poids ou plus par rapport à 100 parties en poids de la composition d'électrode négative.

9. Électrode négative pour une batterie secondaire au lithium comprenant :

une couche de collecteur de courant d'électrode négative ; et
une couche de matériau actif d'électrode négative comprenant la composition d'électrode négative selon l'une quelconque des revendications 1 à 9 sur une surface ou sur les deux surfaces, de la couche de collecteur de courant d'électrode négative.

10. Électrode négative pour la batterie secondaire au lithium de la revendication 9, dans laquelle une épaisseur de la couche de collecteur de courant d'électrode négative est de 1 $\mu$m ou plus et de 100 $\mu$m ou moins, et dans laquelle une épaisseur de la couche de matériau actif d'électrode négative est de 20 $\mu$m ou plus et de 500 $\mu$m ou moins.

11. Batterie secondaire au lithium comprenant :

une électrode positive ;
l'électrode négative pour une batterie secondaire au lithium selon la revendication 9 ;
un séparateur entre l'électrode positive et l'électrode négative ; et
un électrolyte.

[Figure 1]

[Figure 2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210180135
- JP 2009080971 A
- US 2015243994 A1